# EUROPEAN PATENT APPLICATION

(11) **EP 4 779 694 A1**
(43) Date of publication of application: **22.07.2026**
(21) Application number: 25867139.5
(22) Date of filing: 18.07.2025

(54) **LEAD ASSEMBLY, ELECTRODE ASSEMBLY, AND SECONDARY BATTERY COMPRISING SAME**

(30) Priority: 29.11.2024 KR 20240175576
(71) Applicant: LG ENERGY SOLUTION, LTD., Seoul 07335 (KR)
(72) Inventor: YOON, Kyoung Soon, Daejeon 34122 (KR); LEE, Yong Tae, Daejeon 34122 (KR); KO, Myung Hoon, Daejeon 34122 (KR); PARK, Wan Geun, Daejeon 34122 (KR); KIM, Nam Geol, Daejeon 34122 (KR); JEON, Young Je, Daejeon 34122 (KR)
(74) Representative: Goddar, Heinz J.
(86) International application number: PCT/KR2025/010649
(87) International publication number: WO 2026/116659

(57) **Abstract**

A secondary battery according to the present disclosure includes a battery case; an electrode including an electrode body and an electrode tab bent and extending from the electrode body, as an electrode accommodated in the battery case; a first electrode lead coupled to the electrode tab; a second electrode lead coupled to the first electrode lead at the opposite side of a side at which the first electrode lead faces the electrode tab, the second electrode tab extending to an outside of the battery case, and a coating member covering at least a portion of an end portion of the second electrode lead.

## Description

### TECHNICAL FIELD

### CROSS-REFERENCE TO RELATED APPLICATIONS

This application is based on and claims priority from Korean Patent Application No. 10-2024-0175576, filed on November 29, 2024, with the Korean Intellectual Property Office, the disclosure of which is incorporated herein in its entirety by reference.

### TECHNICAL FIELD

The present disclosure relates to a lead assembly, an electrode assembly, and a secondary battery including the same. More particularly, the present disclosure relates to a lead assembly, an electrode assembly, and a secondary battery including the same, which are provided to prevent damage of a battery case.

### BACKGROUND ART

A secondary battery configured to generate electricity is provided such that an electrode assembly is accommodated in a battery case. In this instance, the electrode assembly is formed by alternately stacking a plurality of electrodes and a plurality of separators. The electrode may include an electrode body on which an active material directly involved in electricity generation is located and an electrode tab extending from the electrode body to transfer generated electricity to the outside.

A plurality of electrode tabs of the respective plurality of electrodes may be combined into one electrode tab by welding or the like to be coupled to an electrode lead. The electrode lead may extend from an inside to an outside of the battery case. Accordingly, the generated electricity may be transferred from the electrode tab to the electrode lead. The electrode lead is connected to the outside of the secondary battery, to become a path through which electricity is transferred to a component requiring the electricity.

In this instance, an edge or end portion of the electrode lead is provided sharply, and therefore may damage an inner wall of the battery case. The inner wall of the battery case is coated with a plastic material, and there may occur a problem that when the coating of the plastic material comes off and is damaged by the edge of the electrode lead, electricity is leaked through the damaged portion of the battery case.

In particular, when the electrode tab is bent so as to minimize a dead space, one portion of the electrode lead faces the inner wall of the battery case. Accordingly, it may be highly likely that a problem will occur that the edge of the electrode lead facing the inner wall of the battery case increases a probability that the inner wall of the battery case will be damaged by the edge of the electrode lead.

The above-described background art is technical information that the inventor had or learned when or while deriving embodiments of the present disclosure and may not have been publicly known before the filing of the present application.

### DISCLOSURE

### TECHNICAL PROBLEM

The present disclosure is designed to solve the problems of the related art, and therefore the present disclosure is directed to providing a lead assembly, an electrode assembly, and a secondary battery including the same, which prevent damage of an inner wall of a battery case.

The technical problems to be solved by the present disclosure are not limited to the aforementioned technical problems, and these and other technical problems will be clearly understood by persons having ordinary skill in the technical field pertaining to the present disclosure from the following description.

### TECHNICAL SOLUTION

A secondary battery according to one aspect of the present disclosure includes a battery case; an electrode including an electrode body and an electrode tab bent and extending from the electrode body, as an electrode accommodated in the battery case; a first electrode lead coupled to the electrode tab; a second electrode lead coupled to the first electrode lead at the opposite side of a side at which the first electrode lead faces the electrode tab, the second electrode tab extending to an outside of the battery case; and a coating member covering at least a portion of an end portion of the second electrode lead.

The coating member may face an inner surface of the battery case.

The coting member may be configured to be in contact with an inner surface of the battery case.

The coating member may be more flexible than the second electrode lead.

The coating member may be configured to be electrically insulated.

The coating member may have a width larger than a width of the second electrode lead.

The first electrode lead may have a width larger than a width of the second electrode lead, and the coating member may have a width smaller than the width of the first electrode lead.

The end portion of the second electrode lead may not be located beyond an end portion of the first electrode lead.

The coating member may cover a boundary between the first electrode lead and the second electrode lead.

The coating member may extend up to an end portion of the first electrode lead.

The second electrode lead may include a facing portion facing the first electrode lead and an extension portion extending from the facing portion in a direction distant from the first electrode lead, and the coating member may cover the facing portion.

The coating member may cover all end portions of the facing portion, which are not connected to the extension portion.

The electrode tab may include a first electrode tab and a second electrode tab, which extend from a same side of the electrode body and are bent in different directions, the electrode may be provided in plurality to be stacked, and the plurality of first electrode tabs may be welded and coupled to each other and the plurality of second electrode tabs may be welded and coupled to each other

The electrode tab may include, at an end portion thereof, an end bending portion bent in the opposite direction of a direction in which the electrode tab is bent and extends.

The end bending portion may cover at least a portion of the coating member.

An electrode assembly according to another aspect of the present disclosure includes an electrode including an electrode body and an electrode tab bent and extending from the electrode body; a first electrode lead coupled to the electrode tab; a second electrode lead coupled to the first electrode lead at the opposite side of a side at which the first electrode lead faces the electrode tab, the second electrode lead extending to the opposite side of a side at which the second electrode lead faces the first electrode lead; and a coating member covering at least a portion of an edge at which the first electrode lead and the second electrode lead are in contact with each other.

The coating member may be more flexible than the second electrode lead.

The coating member may be configured to be electrically insulated.

The coating member may have a width larger than a width of the second electrode lead.

A lead assembly according to still another aspect of the present disclosure includes a first electrode lead; a second electrode lead including a facing portion facing the first electrode and an extension portion bent from the facing portion to extend in a direction distant from the first electrode lead; and a coating member covering at least a portion of an edge of the facing portion.

### ADVANTAGEOUS EFFECTS

According to one aspect of the present disclosure, the lead assembly includes a coating member covering an end portion of the electrode lead, so that an inner wall of the battery case can be prevented from being damaged by the end portion of the electrode lead.

According to one aspect of the present disclosure, the coating member of the lead assembly is provided to be electrically insulated, so that electricity can be prevented from being leaked through the coating member.

According to one aspect of the present disclosure, the lead assembly includes a first electrode lead, a second electrode lead coupled to the first electrode lead, and a coating member coupled to an edge of the second electrode lead facing the sealed lead sealing portion of the battery case, so that the sealing of the lead sealing portion can be prevented from being released as the coating member damages the lead sealing portion.

According to one aspect of the present disclosure, the electrode assembly and the secondary battery include the above lead assembly, to have the above effects.

The effects of the present disclosure are not limited to the effects mentioned above, and other effects not mentioned will be clearly understood by those skilled in the art from the description of the claims.

### DESCRIPTION OF DRAWINGS

FIG. 1 is an assembly diagram of a secondary battery according to a first embodiment of the present disclosure.
FIG. 2 shows perspective and front views of a secondary battery according to a comparative example of the present disclosure.
FIG. 3 is a cross-sectional perspective view of the secondary battery shown in FIG. 2.
FIG. 4 shows perspective and front views of the secondary battery shown in FIG. 1.
FIG. 5 is a cross-sectional perspective view of the secondary battery shown in FIG. 4.
FIG. 6 is a cross-sectional view of the secondary battery shown in FIG. 4.
FIG. 7 is an assembly diagram of an electrode assembly shown in FIG. 4.
FIG. 8 is a cross-sectional view of a secondary battery according to a second embodiment of the present disclosure.
FIG. 9 is a cross-sectional view of a secondary battery according to a third embodiment of the present disclosure.
FIG. 10 is a cross-sectional view of a secondary battery according to a fourth embodiment of the present disclosure.

### BEST MODE

Hereinafter, the exemplary embodiments of the present disclosure will be described in sufficient detail with reference to the accompanying drawings to enable persons having ordinary skill in the technical field pertaining to the present disclosure to easily carry out the present disclosure. However, the present disclosure may be embodied in many different forms and is not limited or restricted by the following embodiments.

To clearly describe the present disclosure, an irrelevant description or a detailed description of related known technology that may unnecessarily obscure the gist of the present disclosure is omitted, and in affixing the reference numerals to the elements in each drawing, the identical or similar reference numerals are affixed to the identical or similar elements throughout the specification.

Additionally, it should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

It should be understood that various embodiments of the present disclosure and the terms used herein are not intended to limit the technical features of the present disclosure to particular embodiments, and include a variety of changes, equivalents or substitutes of the corresponding embodiments.

In relation to the description of the drawings, for the similar or related elements, the similar reference numerals may be used.

The singular form of a noun corresponding to an item may include one or more items unless otherwise indicated by the context.

Each of phrases such as "A or B," "at least one of A and B," "at least one of A or B," "A, B or C," "at least one of A, B and C" and "at least one of A, B or C" as used herein may include any one of the items listed together with the corresponding phrase or all possible combinations of them.

The term "and/or" includes a combination of a plurality of related stated elements or any of the plurality of related stated elements.

The terms such as "first," "second" and so on may be simply used to distinguish the corresponding element from the corresponding other embodiment, and are not intended to limit the corresponding elements in another aspect 130a-1 (for example, importance or order).

When an element (for example, first) is referred to as being "coupled" or "connected" to another element (for example, second) with or without the term "functionally" or "through communication," the element may be connected to the other element directly (for example, wiredly), wirelessly or through a third element.

The term "comprise," "include" or "have" indicates the presence of the stated features, figures, steps, operations, elements, components or a combination of them, and does not preclude the presence or addition of one or more other features, figures, steps, operations, elements, components or a combination of them.

When an element is referred to as "being connected to," "being coupled to," "being supported by" or "contacting" another element, this includes the cases in which the elements are directly connected, coupled, supported or contacted with each other and they are indirectly connected, coupled, supported or contacted with each other through a third element.

When an element is referred to as being located "on" another element, the element can contact the other element and another element may be present between them.

Meanwhile, the terms "up-down direction," "lower," and "front-rear direction" as used herein are defined on the basis of the drawings, and the shape and location of each element is not limited by these terms.

Hereinafter, embodiments according to the present disclosure will be described in detail with reference to the accompanying drawings.

### First embodiment

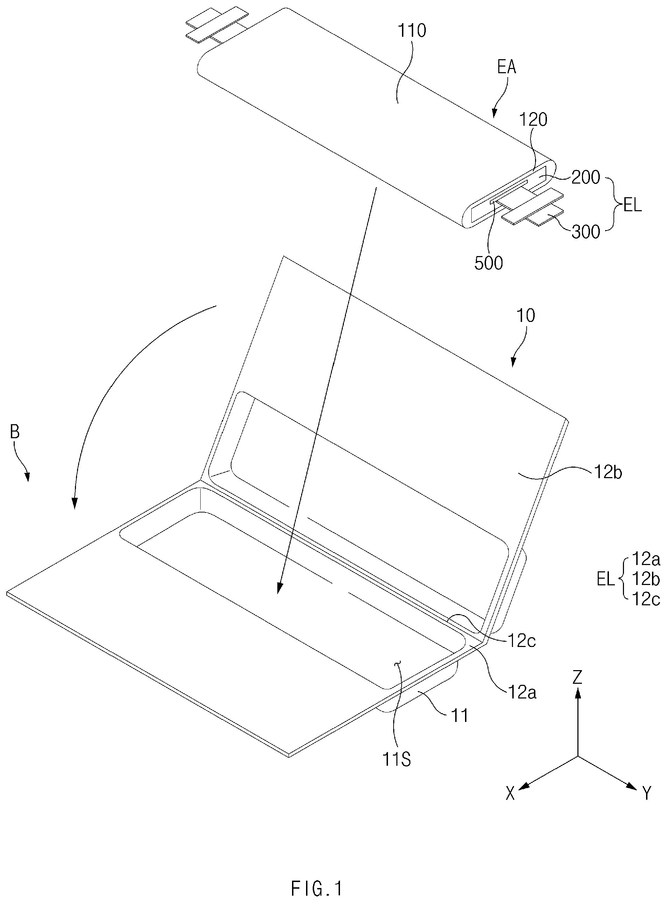

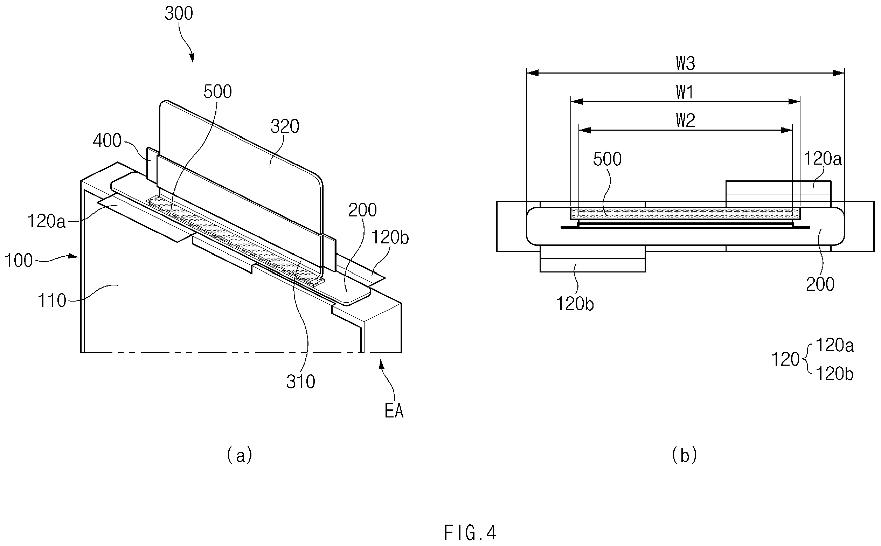

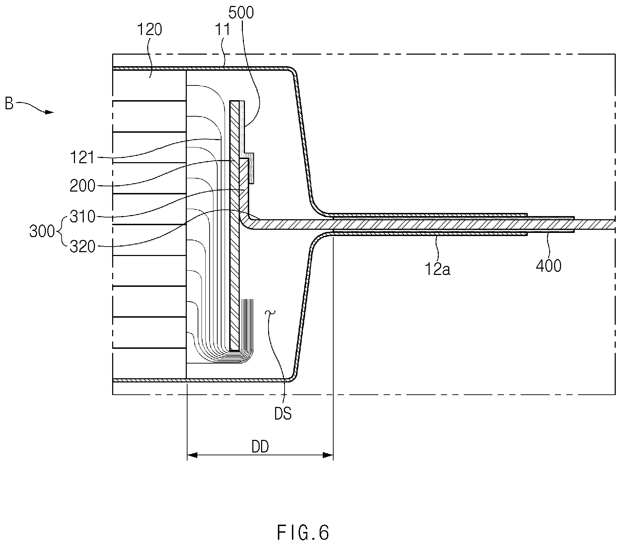

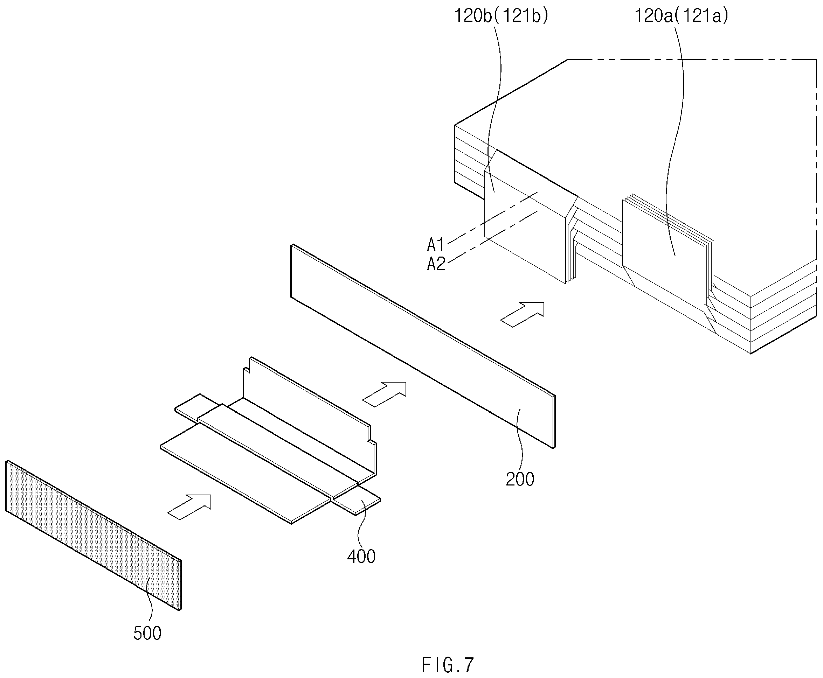

FIG. 1 is an assembly diagram of a secondary battery B according to a first embodiment of the present disclosure. FIG. 6 is a cross-sectional view of the secondary battery B shown in FIG. 4. FIG. 7 is an assembly diagram of an electrode assembly EA shown in FIG. 4.

The secondary battery B according to the first embodiment of the present disclosure will be described with reference to FIGS. 1, 6, and 7.

The secondary battery B configured to generate electricity may be provided. The secondary battery B may be rechargeable and used plural times. The secondary battery B may include a battery case 10 located at an outside thereof, the electrode assembly EA accommodated inside the battery case 10, and an electrolyte configured to be injected into the battery case 10. In this instance, as shown in FIG. 1, the battery case 10 may be formed by a pouch film. However, the battery case 10 may be provided in a cylindrical type or a prismatic type according to the needs. The electrolyte may generally mean a liquid-state electrolyte but may mean a solid-state electrolyte according to the needs.

The battery case 10 may include an accommodation portion 11 in which an electrode accommodation space 11S is formed to accommodate the electrode assembly EA and a side portion 12 extending from the accommodation portion 11. The accommodation portion 11 may be provided in a pair as shown in FIG. 1. When the electrode assembly EA is accommodated in any one accommodation portion 11, the other accommodation portion 11 covers the electrode assembly EA, to allow the electrode assembly EA to be accommodated in the battery case 10. The accommodation portion 11 may be formed in a pair in a single battery case 10. However, according to the needs, the accommodation portion 11 may be formed one by one in each of a pair of battery cases 10 distinguished from each other. Further, the accommodation portion 11 may be provided as a single one according to the needs.

The side portion 12 may include a lead sealing portion 12a, a degassing sealing portion 12b, and/or a folding portion 12c. The lead sealing portion 12a may be provided in a pair to extend in a Y direction from the accommodation portion 11. The degassing sealing portion 12b may be provided in a pair to extend in an X direction from the accommodation portion 11. The folding portion 12c may be located between the pair of accommodation portions 11. As shown in FIG. 1, the folding portion 12c may be folded such that the pair of accommodation portions 11 are located to face each other. When the pair of accommodation portions 11 face each other, the folded lead sealing portions 12c may be located to face each other, and the pair of degassing sealing portions 12b may also be located to face each other. The lead sealing portions 12a facing each other and the degassing sealing portions 12b facing each other are fused with each other by heat and pressure, to seal the accommodation portion 11. Further, the degassing sealing portion 12b is trimmed to a predetermined length so as to increase space utility of the secondary battery B by reducing the length thereof, and the trimmed degassing sealing portion 12b is re-folded, thereby reducing a space occupied by the degassing sealing portion 12b.

The electrode assembly EA may include an electrode 100, a separator (not shown), and/or an electrode lead EL. The electrode 100 and the separator each may be provided in plurality such that the plurality of electrodes and the plurality of separators are alternately stacked. In this instance, the electrode 100 may include an electrode body and an electrode tab 120 extending from the electrode body. The electrode tab 120 may be formed to have a width smaller than a width of the electrode body. An active material is coated on the electrode body to directly generate electricity. The electrode tab 120 may serve as a path through which the electricity generated by the electrode body is transferred. The electrode tab 120 is coupled to the electrode lead EL to transfer the electricity to the electrode lead EL. The electrode lead EL protrudes to an outside of the battery case 10 such that an external component requiring electricity can be supplied with the electricity from the secondary battery B while being in contact with the electrode lead EL.

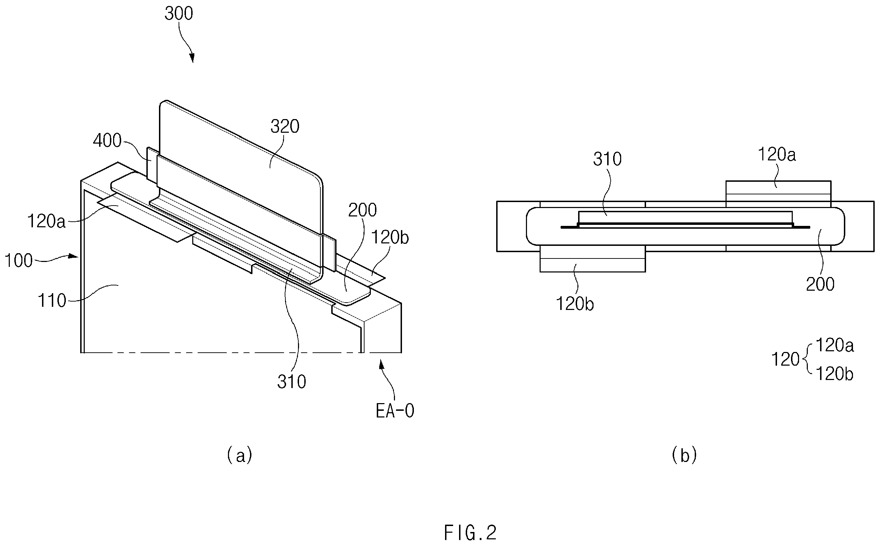

In this instance, the electrode tab 120 is not a portion which generates electricity, and therefore may not contribute to an amount of electricity generated per space. Accordingly, it is necessary to reduce a dead space DS which is a space occupied by the electrode tab 120. In order to solve this, a secondary battery B according to an embodiment of the present disclosure may be provided as shown in FIG. 2.

The electrode tab 120 may be configured not to extend toward an outside of the electrode 100 but to be bent to a lower side from the electrode body so as to be adhered closely to the electrode body. However, the bending direction of the electrode tab 120 may become an upper side instead of the lower side according to the needs, and further, may become another direction as long as the bending direction is not parallel to the extending direction of the electrode body. The bent electrode tab 120 may form one electrode tab 120. One surface of the electrode tab 120 is located toward the right side with respect to FIG. 2, and the electrode lead EL may be coupled to the one surface of the electrode tab 120 at the right side of the electrode tab 120. Accordingly, a distance from the electrode body to an end portion of the electrode tab 120 may become shorter than a distance when the electrode tab 120 extends in a direction parallel to the electrode body. A space located at the upper side and the lower side of the electrode tab 120 is a space unnecessary for generating electricity and may form the dead space DS. In particular, as illustrated in FIG. 7, in order to reduce the dead space DS, it may be necessary to reduce a dead space distance DD which is a distance to an inner wall of the accommodation portion 11.

The electrode tab 120 may be bent from the electrode body. In this instance, each electrode 100 may be stacked in a state in which the electrode tab 120 has already been bent from the electrode body. However, according to the needs, the electrode 100 including the electrode tab 120 not bent from the electrode body may be first stacked, and the stacked electrode tab 120 may be bent from the electrode body after the stacking.

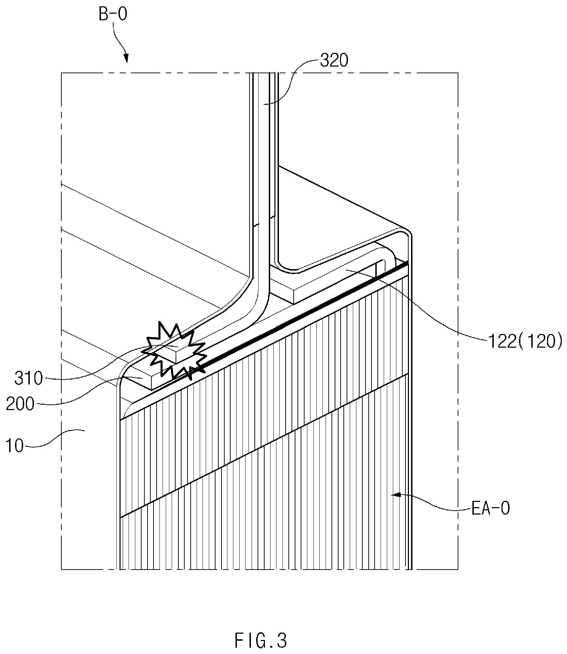

In this instance, the electrode tab 120 may include a first electrode tab 120a extending from the electrode body and a second electrode tab 120b extending at the same side as a side of the electrode body, from which the first electrode tab 120a extends. With respect to FIG. 3, the side of the electrode body, from which the first electrode tab 120a and the second electrode tab 120b extend, may become the front. The first electrode tab 120a and the second electrode tab 120b may have a same polarity. For example, when the first electrode tab 120a is a positive electrode, the second electrode tab 120b may also be the positive electrode. Forming an electrode tab 120 having one polarity as a pair of electrode tabs 120 instead of a single electrode tab 120 may be for the purpose of preparing for a welding defect to be described below. Further, a plurality of electrode tabs 120 are formed, so that resistance caused by the electrode tabs 120 can be lowered while electricity is transferred through the electrode tabs 120. In this instance, the electrode tab 120 is not provided in a pair but may be provided with electrode tabs 120 of which number is larger than that of the pair of electrode tabs 120.

The first electrode tab 120a may be located at the right side of the second electrode tab 120b to be bent to the lower side, and the second electrode tab 120b may be located at the left side of the first electrode tab 120a to be bent to the upper side. In this instance, the electrode tab 120 may be understood as an upper concept obtained by extracting common features of the first electrode tab 120a and the second electrode tab 120b. Further, a bending direction of the first electrode tab 120a is only different from a bending direction of the second electrode tab 120b, and the bending direction of the first electrode tab 120a may become another direction instead of the upper side according to the needs. In addition, the first electrode tab 120a may be located at another position instead of the right side of the second electrode tab 120b according to the needs. The first electrode tab 120a may be stacked in plurality to form one first electrode tab 120a, and the second electrode tab 120b may be stacked in plurality to form one second electrode tab 120b. In this instance, the electrode tab 120 may be understood as an upper concept obtained by extracting common features of the first electrode tab 120a and the second electrode tab 120b. In this instance, the first electrode tab 120a may be bent such that a lower surface thereof is exposed with respect to when the first electrode tab 120a extends in a direction parallel to the extending direction of the electrode body before being bent. The second electrode tab 120b may be bent such that an upper surface thereof is exposed with respect to when the second electrode tab 120b extends in a direction parallel to the extending direction of the electrode body before being bent. In other words, the electrode tab 120 may have a form in which the plurality of electrode tabs 120 are lowered and bent in one direction. Since the electrode tab 120 has a small degree to which the electrode tab 120 protrudes with respect to the electrode body, the dead space DS can be reduced.

A first electrode lead 200 may be provided to be coupled to the first electrode tab 120a and the second electrode tab 120b. The above-described electrode lead EL may be an upper concept obtained by extracting common features of the first electrode lead 200 and a second electrode lead 300. The first electrode lead 200 may be located at the front of the first electrode tab 120a and the second electrode 100 tab. Accordingly, a rear surface of the first electrode lead 200 may be coupled the lower surface of the first electrode tab 120a before the bending and the upper surface of the second electrode tab before the bending. In other words, the first electrode lead 200 may be coupled to the first electrode tab 120a and the second electrode tab 120b by being welded to the first electrode tab 120a and the second electrode tab 120b in directions in which the first electrode tab 120a and the second electrode tab 120b extend while overlapping the first electrode tab 120a and the second electrode tab 120b. In this instance, the first electrode lead 200 may have a plate shape. More specifically, the first electrode lead 200 may have a plate shape and overlap the first electrode tab 120a and the second electrode tab 120b. The first electrode lead 200 may not be located beyond the stacked electrode body. However, when the first electrode lead 200 is coupled to the first electrode tab 120a and the second electrode tab 120b, the first electrode lead 200 may have another shape instead of the plate shape according to the needs. Further, the first electrode lead 200 may be formed as a single body. However, the according to the needs, the first electrode lead 200 may be provided as an assembly of a plurality of components when the plurality of components are electrically connected to each other. Further, it may be defined that the first electrode lead 200 and the second electrode lead 300 form a lead assembly.

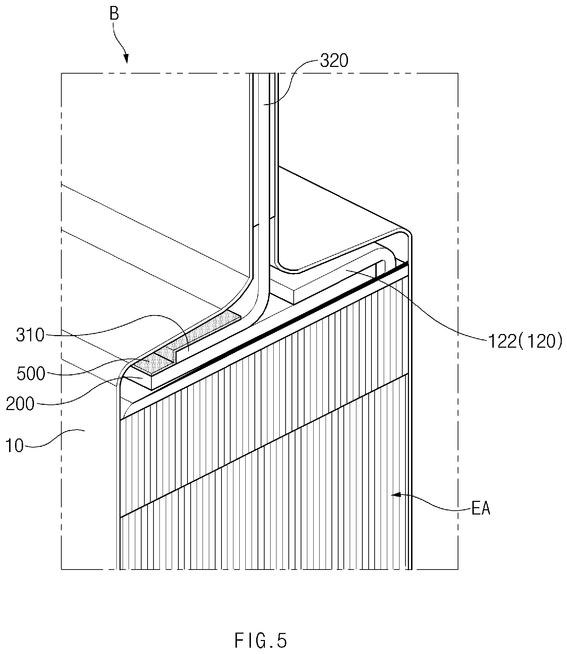

The electrode tab 120 may have different overlapping degrees of the electrode tabs 120 according to positions thereof. When considering, with respect to FIG. 4, overlapping degrees of the electrode tabs 120 in a first tab overlapping area A1 located at an upper side and a second tab overlapping area A2 located at a lower side of the first tab overlapping area A1, a tab overlapping degree in the second tab overlapping area A2 is larger than a tab overlapping degree in the first tab overlapping area A1. In this instance, as shown in FIG. 5, in a case where a welding line is formed by performing welding toward the electrode tab 120 from an outside of the first electrode lead 200, when uniform thermal energy is applied to the welding line, the thermal energy generated by the welding can be sufficiently transferred to the electrode tabs 120 in the first tab overlapping area A1, but may not be sufficiently transferred to the electrode tab 120 closest to the electrode body in the second tab overlapping area A2. Therefore, the electrode tab 120 closest to the electrode body may not be coupled to an adjacent electrode tab 120. In order to overcome this, the electrode tab 120 may be composed of two electrode tabs, i.e., the first electrode tab 120a and the second electrode tab 120b, and the first electrode tab 120a and the second electrode tab 120b may be provided to have different bending directions. In particular, as shown in FIG. 4, when the second electrode tab 120b is bent to the lower side, larger overlapping of the second electrode tab 120b occurs at a portion of the second electrode tab 120b, which is located at a relatively lower side, as compared with a portion of the second electrode tab 120b, which is located at a relatively upper side, and therefore, there is a risk that the welding will not be properly performed. On the contrary, since smaller overlapping of the bent first electrode tab 120a occurs at a portion of the first electrode tab 120a, which is located at a relatively lower side, as compared with a portion of the first electrode tab 120a, which is located at a relatively upper side, the welding is performed on the first electrode tab 120a even when the welding is not properly performed on the second electrode tab 120b, thereby reducing a probability that an electrode tab 120 not welded to an adjacent electrode tab will exist. Further, when a single electrode tab 120 is provided, a bending moment may occur in a direction in which bending is released, and the first electrode lead 200 coupled to the single electrode tab 120 may be turned in one direction by the bending moment. However, in the first embodiment of the present disclosure, in a case where the first electrode tab 120a and the second electrode tab 120b are provided to have different bending directions, although a bending moment occurs in a direction in which bending of the first electrode tab 120a is released, a bending moment occurring in a direction in which bending of the second electrode tab 120b is released occurs in the opposite direction. Accordingly, the bending moments cancel each other, so that movement of the first electrode lead 200 can be prevented. Additionally, coupling of the first electrode lead 200, and the first electrode tab 120a and the second electrode tab 120b may be made by another method instead of the welding according to the needs.

When the first electrode lead 200 is coupled to the first electrode tab 120a and the second electrode tab 120b, an end portion of the first electrode tab 120a may be exposed to an upper side of the first electrode lead 200, and an end portion of the second electrode tab 120b may be exposed to the upper side of the first electrode lead 200. The exposed end portion of the first electrode tab 120a may be bent to the lower side to face an outer surface of the first electrode lead 200, and the exposed end portion of the second electrode tab 120b may be bent to the upper side to face an outer surface of the first electrode lead 200. In other words, the end portions of the first electrode tab 120a and the second electrode tab 120b may be bent to be in contact with the opposite side of a side at which the first electrode lead 200 faces the electrode body.

The second electrode lead 300 may include a facing portion 310 facing the first electrode lead 200 and an extension portion 320 extending from the facing portion 310 in a direction distant from the electrode 100. In this instance, the facing portion 310 may extend in a direction parallel to the extending direction of the first electrode lead 200. Further, the facing portion 310 may be coupled to the first electrode lead 200 while being in surface contact with the first electrode lead 200. Accordingly, resistance between the facing portion 310 and the first electrode lead 200 may be reduced as compared with resistance when the facing portion 310 is coupled to the first electrode lead 200 while being in point contact with the first electrode lead 200. The extension portion 320 may bent at the facing portion 310 to extend toward the front. However, when the extension portion 320 extends in a direction distant from the electrode body, the extension portion 320 may extend in another direction instead of the front according to the needs. In this instance, the position of the extension portion 320 may be a position corresponding to the middle of the electrode body in the stacking direction. In other words, a height H from an end portion of the accommodation portion 11 to the extension portion 320 may be a half of a distance between the pair of accommodation portions 11. Accordingly, the pair of accommodation portions 11 may be formed with a corresponding depth.

As described above, the electrode tab 120 may be bent so as to reduce the dead space DS, and the first electrode lead 200 and the second electrode lead 300 may be provided to be coupled to the bent electrode tab 120.

In this instance, an end portion of the second electrode lead 300 is formed sharply, and therefore may scratch an inner wall of the battery case 10. This will be described with reference to a secondary battery B according to a comparative example of the present disclosure, which will be described later.

FIG. 2 shows perspective and front views of the secondary battery B according to the comparative example of the present disclosure. FIG. 3 is a cross-sectional perspective view of the secondary battery B shown in FIG. 2.

The secondary battery B according to the comparative example of the present disclosure and problems according thereto will be described with reference to FIGS. 2 and 3.

As described above with reference to FIG. 1 and the like, the electrode lead EL may be located adjacent to the inner wall of the battery case 10. Therefore, as shown in FIG. 3, the electrode lead EL may damage the inner wall of the battery case 10 or form cracks on the inner wall of the battery case 10 while being in contact with the inner wall of the battery case 10.

In particular, when the battery case 10 is formed by a pouch film, it is necessary for the pouch films to be sealed by being in contact with each other and being fused through application of heat, and hence a layer made of plastic which can be easily melted by heat may be formed on one surface of the pouch film. In particular, the plastic layer may include polypropylene (PP). When the battery case 10 is formed by the pouch film, the plastic layer of the pouch film may be located inside the battery case 10. The pouch film may include a metal layer outside the plastic layer. When the battery case is formed by the pouch film, the metal layer may be located outward from the plastic layer. In this instance, when the plastic layer corresponding to the inner wall of the battery case 10 is damaged by the electrode lead EL, the electrode lead EL and the metal layer of the battery case 10 are in contact with each other, and therefore, electricity may flow from the electrode lead EL to the metal layer. In this case, there may occur a problem that electricity is leaked to an outer surface of the completed secondary battery B.

Further, when the battery case 10 is formed by the pouch film, the accommodation portion 11 is formed by stretching of the pouch film, and hence is formed to have a thin thickness. Therefore, the accommodation portion 11 may be weak to cracks. In particular, the electrode lead EL located adjacent to the accommodation portion 11 may easily form cracks on the accommodation portion 11. Furthermore, in the case of the electrode lead EL adjacent to the lead sealing portion 12a, the electrode lead EL may form cracks adjacent to the lead sealing portion 12a, and therefore, there may be a risk that the sealing of the lead sealing portion 12a will be released.

By considering the above points, it may be necessary to prevent damage of the inner wall of the battery case 10 due to electrode lead EL.

In particular, the second electrode lead 300 may be located closer to the inner wall of the battery case 10 than the first electrode lead 200, and therefore, it is highly likely that the second electrode lead 300 will damage the inner wall of the battery case 10, as compared with the first electrode lead 200. Accordingly, it may be necessary to prevent damage of the inner wall of the battery case 10 due to the second electrode lead 300. In particular, an edge or end portion of the second electrode lead 300 is formed more sharply than other portions, and therefore, it is highly likely that the battery case 10 will be damaged by the edge or end portion of the second electrode lead 300. Accordingly, it is necessary to prevent damage of the battery case 10 due to the edge or end portion of the second electrode lead 300.

By considering this, the secondary battery B according to the first embodiment of the present disclosure will be described below.

FIG. 4 shows perspective and front views of the secondary battery B shown in FIG. 1. FIG. 5 is a cross-sectional perspective view of the secondary battery B shown in FIG. 4. FIG. 6 is a cross-sectional view of the secondary battery B shown in FIG. 4. FIG. 7 is an assembly diagram of the electrode assembly EA shown in FIG. 4.

The secondary battery B according to the first embodiment of the present disclosure will be described with reference to FIGS. 4 to 7. In this instance, for description of the secondary battery B according to the first embodiment of the present disclosure, some of the above descriptions may be repeated below.

As shown in FIG. 7, the secondary battery B may include the battery case 10 and the electrode assembly EA. In this instance, the electrode assembly EA may include the electrode 100 including the electrode body and the electrode tab 120 bent and extending from the electrode body, and/or the lead assembly coupled to the electrode tab 120. In this instance, the lead assembly may include the first electrode lead 200 coupled to the electrode tab 120, and the second electrode lead 300 which is coupled to the first electrode lead 200 at the opposite side of a side at which the first electrode lead 200 faces the electrode tab 120, and extends to an outside of the battery case 10. The first electrode lead 200 may have a plate shape extending parallel to the bending direction of the electrode tab 120. More specifically, the first electrode lead 200 may have a rectangular shape having substantially round corners. The second electrode lead 300 may be bent to have an L shape. Specifically, the second electrode lead 300 may have a shape in which a rectangular plate having round corners is bent. More specifically, the second electrode lead 300 may include the facing portion 310 facing the first electrode lead 200 and the extension portion 320 which is bent from the facing portion 310 and extends in a direction distant from the first electrode lead 200.

The first electrode lead 200 can be prevented from being located beyond the thickness of the stacked electrode 100 as shown in FIG. 4(b). An end portion of the first electrode lead 200 may be sharp, and therefore may apply a shock while being in direct contact with an inner surface of the battery case 10 when the first electrode lead 200 is located beyond the electrode 100. In order to prevent this, the first electrode lead 200 may be located to overlap a plurality of stacked electrodes 100 when viewing the plurality of stacked electrodes 100 in a direction facing the electrode tab 120 as shown in FIG. 4(b). Specifically, the first electrode lead 200 may be provided to be located in the middle of the plurality of stacked electrodes 100 when viewing the plurality of stacked electrodes 100 in the direction facing the electrode tab 120.

In this instance, an end portion of the second electrode lead 300 may not be located beyond the end portion of the first electrode lead 200. Hereinafter, this will be described in more detail.

The facing portion 310 may be located to overlap the first electrode lead 200. As shown in FIG. 4(b), the facing portion 310 may be coupled to the first electrode lead 200 to be prevented from being exposed beyond the first electrode lead 200. When an end portion of the facing portion 310 is exposed beyond the first electrode lead 200, a sharp edge of the end portion of the facing portion 310 may scratch and damage the inner surface of the battery case 10, and therefore, that the facing portion 310 is not exposed beyond the first electrode lead 200 may be one method for protecting the inner surface of the battery case 10. Specifically, the facing portion 310 may have a substantially rectangular shape having long sides and short sides, and a length W2 of the long side of the facing portion 310 may be provided shorter than a length W3 of a long side of the first electrode lead 200. Further, a length of the short side of the facing portion 310 may be provided shorter than a length of a short side of the first electrode lead 200. In this instance, the middle of the long side of the facing portion 310 is located at a position corresponding to the middle of the long side of the first electrode lead 200, and thus both end portions of the long side of the facing portion 310 may be prevented from being located beyond end portions of the first electrode lead 200. The short sides of the facing portion 310 may be located close to any one of both the long sides of the first electrode lead 200 such that the extension portion 320 is located in the middle between the short sides of the first electrode lead 200.

Accordingly, the second electrode lead 300 is located close to the inner surface of the battery case 10 as shown in FIG. 6, and therefore, the sharp edge of the facing portion 310 of the second electrode lead 300 may scratch the inner surface of the battery case 10. In order to protect this, the lead assembly may include a coating member 500 to prevent a portion of the second electrode lead 300 from being in contact with the inner surface of the battery case 10.

As shown in FIG. 7, the coating member 500 may cover at least a portion of the second electrode lead 300. More specifically, the coating member 500 may cover an end portion of the second electrode lead 300, which has a high probability that the end portion of the second electrode lead 300 will scratch the inner surface of the battery case 10. More specifically, the coating member 500 may cover the facing portion 310 as shown in FIG. 6. According to the needs, an end portion of the second electrode lead 300 facing the inner surface of the battery case 10 is not located only at the facing portion 310, and therefore, the coating member 500 may cover the extension portion 320 of the second electrode lead 300. Further, according to the needs, a probability that an end portion of the first electrode lead 200 will scratch the inner surface of the battery case 10 still exists, and therefore, the coating member 500 may be provided to the end portion of the first electrode lead 200. However, a portion having the highest probability that the portion will scratch the inner surface of the battery case 10 is the end portion of the facing portion 310 as shown in FIG. 5, and therefore, the coating member 500 may be provided to cover at least a portion of the end portion of the facing portion 310.

Additionally, an adhesive is on a surface of the coating member 500, which faces the second electrode lead 300, and therefore, the coating member 500 and the second electrode lead 300 may be coupled to each other by the adhesive. Further, the coating member 500 may also be coupled to the first electrode lead 200 as shown in FIG. 6, and therefore may be coupled to the first electrode lead 200, using the same method as the coupling method to the second electrode lead 300.

In this instance, as shown in FIG. 5 or 6, the coating member 500 may be provided to face the inner surface of the battery case 10. Furthermore, the coating member 500 may be configured to be in contact with the inner surface of the battery case 10. Although it has been illustrated in FIG. 6 that the distance between the coating member 500 and the battery case 10 looks considerably distant, this is merely exaggerated so as to emphasize existence of the coating member 500, and the distance between the coating member 500 and the battery case 10 may be preferably close. This is because a space between the coating member 500 and the inner surface of the battery case 10 is the dead space DS not involved in electricity generation, and hence reducing the dead space DS is a method of increasing an amount of electricity generated per volume. However, according to the needs, a predetermined distance may be formed between the coating member 500 and the inner surface of the battery case 10.

The coating member 500 may be more flexible than the second electrode lead 300. As the coating member 500 is provided, the second electrode lead 300 is not in contact with the inner surface of the battery case, but the coating member 500 may be in contact with the inner surface of the battery case 10. The coating member 500 may have a material which forms a small number of cracks on the inner surface of the battery case 10 as compared with the second electrode lead 300. For example, the coating member 500 may have a material absorbing a shock, such as rubber. The material absorbing the shock is flexible, and therefore, the coating member 500 may be more flexible than the second electrode lead 300. Alternatively, the coating member 500 may be made of a material similar to that of the inner surface of the battery case 10, to have a polymer or plastic material.

The coating member 500 may be configured to be electrically insulated. The coating member 500 may prevent electricity from flowing from the second electrode lead 300 to the battery case 10. As described above, there was a problem that when cracks occurred in the battery case 10, electricity flowed to the battery case 10. The coating member 500 prevents the second electrode lead 300 and the battery case 10 from being in direct contact with each other, and the coating member 500 itself may be made of an electrical insulating material not to function to transfer electricity from the second electrode lead 300 to the battery case 10 even when the coating member 500 is in contact with the battery case 10. By considering these points, the coating member 500 is not necessarily located only on the end portion of the second electrode lead 300 but may be located to cover most or all portions of the second electrode lead 300, which face the inner surface of the battery case 10, according to the needs. Further, the coating member 500 may be provided to cover even the first electrode lead 200 according to the needs.

The coating member 500 may have a substantially rectangular shape to be provided with long sides and short sides as shown in FIG. 4. In this instance, the long side of the coting member 500 may be located at a position corresponding to the long side of the first electrode lead 200 and the long side of the facing portion 310 of the second electrode lead 300. In particular, as shown in FIG. 5, it may be highly likely that end portions corresponding to the long sides of the facing portion 310 of the second electrode lead 300 will damage the inner wall of the battery case 10. In order to prevent this, the coating member 500 may be provided to cover both the end portions corresponding to the long sides of the facing portion 310 of the second electrode lead 300. That is, the coating member 500 may have a width W1 larger than the width W2 of the second electrode lead 300. Here, the width may be a concept corresponding to the above-described long side. In this instance, the middle of the long side of the coating member 500 may be located at a position corresponding to the middle of the long side of the second electrode lead 300. Accordingly, as shown in FIG. 4, the coating member 500 may cover all edges of the facing portion 310, which are not connected to the extension portion 320. Therefore, all the portions of the facing portion 310 may be covered by the coating member 500 not to be in direct contact with the inner wall of the battery case 10.

Further, the coating member 500 may have the width W1 smaller than the width of the first electrode lead 200. When the width of the coating member 500 is longer than the width W3 of the first electrode lead 200, the coating member 500 may be exposed beyond the first electrode lead 200. A portion of the coating member 500, which is exposed beyond the first electrode lead 200, merely occupies a volume unless that the portion of the coating member 500 plays a particular role, and therefore, the dead space DS may be increased. Accordingly, the coating member 500 overlaps the first electrode lead 200, and may not be located beyond the first electrode lead 200.

As shown in FIG. 5, the coating member 500 may cover a boundary between the first electrode lead 200 and the second electrode lead 300. The first electrode lead 200 and the second electrode lead 300 may be coupled to each other by a method such as welding. In this instance, the coupling of the first electrode lead 200 and the second electrode lead 300 may not be perfect, and therefore may be released. In particular, an electrolyte (not shown) may be accommodated in the secondary battery B, and may react with components adjacent thereto while the secondary battery B generates electricity. Accordingly, when the coating member 500 does not cover the boundary between the first electrode lead 200 and the second electrode lead 300, the electrolyte is injected between the first electrode lead 200 and the second electrode lead 300, and therefore, a coupling force between the first electrode lead 200 and the second electrode lead 300 may be weakened. By considering these points, in the first embodiment of the present disclosure, the coating member 500 covers only a boundary between an upper side of the facing portion 310 of the second electrode lead 300 and the first electrode lead 200 as shown in FIG. 6, but a separate coating member 500 may be provided to cover a boundary between a lower side of the extension portion 320 and the first electrode lead 200 according to the needs. Further, as the coating member 500 covers the boundary between the first electrode lead 200 and the second electrode lead 300, the first electrode lead 200 and the second electrode lead 300 are coupled to each other by the coating member 500. Accordingly, as the coating member 500 is located between the first electrode lead 200 and the second electrode lead 300, the coupling between the first electrode lead 200 and the second electrode lead 300 can be maintained by the coating member 500 even when the coupling between the first electrode lead 200 and the second electrode lead 300 is released by chance.

As shown in FIG. 6, the coating member 500 may extend up to an end portion of the first electrode lead 200. It has been described above that it is not preferable that the coating member 500 is exposed to the outside of the first electrode lead 200. However, as an area in which the coating member 500 is in contact with the first electrode lead 200 becomes larger, a coupling force of the coating member 500 to the first electrode lead 200 becomes stronger, and thus the coupling force between the first electrode lead 200 and the second electrode lead 300 can become stronger as described above. Further, as the area in which the coating member 500 is in contact with the first electrode lead 200 becomes larger, the coating member 500 can reduce an area in which the first electrode lead 200 is in direct contact with the inner surface of the battery case 10, thereby reducing a problem of cracks occurring while the battery case 10 is in contact with the first electrode lead 200 having high stiffness. Furthermore, as the area in which the coating member 500 is in contact with the first electrode lead 200 becomes larger, additional problems occurring while the first electrode lead 200 is in contact with the electrolyte can be reduced. By considering these points, it is necessary for the coating member 500 not to be located beyond the first electrode lead 200 while being considerably in contact with the first electrode lead 200. Therefore, the coating member 500 may extend up to the end portion of the first electrode lead 200.

Additionally, as shown in FIG. 4, when the electrode tab 120 is bent once and extends, the electrode tab 120 may extend beyond the electrode body to form an end bending portion. The end bending portion extending beyond the electrode body may form the unnecessary dead space DS, and therefore may be modified to occupy a small space. That is, the end bending portion may be bent in the opposite direction of a direction in which the electrode tab 120 is bent and extends. Accordingly, the end bending portion may cover at least a portion of the coating member 500.

Hereinafter, different embodiment(s) from the first embodiment will be described. The common description to the first embodiment and the other embodiment(s) is omitted and the other embodiment(s) will be described based on difference(s). That is, it is obvious that when a certain description not mentioned in the other embodiments is necessary, the description of the first embodiment may make up for the description.

### Second embodiment

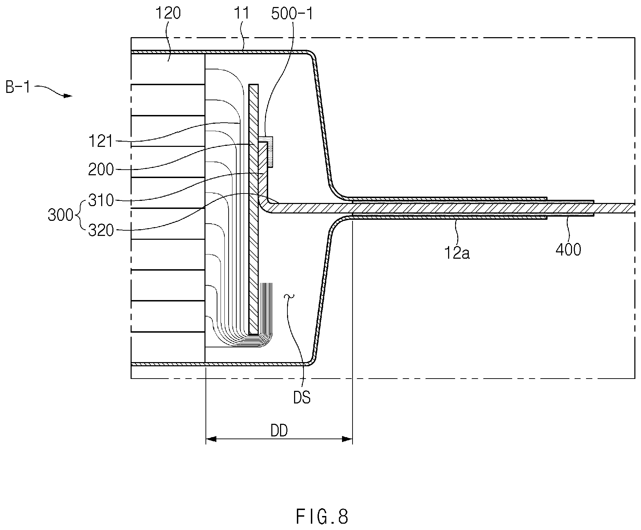

FIG. 8 is a cross-sectional view of a secondary battery B-1 according to a second embodiment of the present disclosure.

An electrode assembly EA-1 including a coating member 500-1 according to the second embodiment of the present disclosure will be described with reference to FIG. 8.

The second embodiment is different from the first embodiment in that the coating member 500-1 covers only an edge of an end portion of the second electrode lead 300 and does not cover the first electrode lead 200.

The coating member 500-1 according to the second embodiment has a small area which the coating member 500-1 covers as compared with the first embodiment, and thus the use of the coating member 500-1 can be minimized.

### Third embodiment

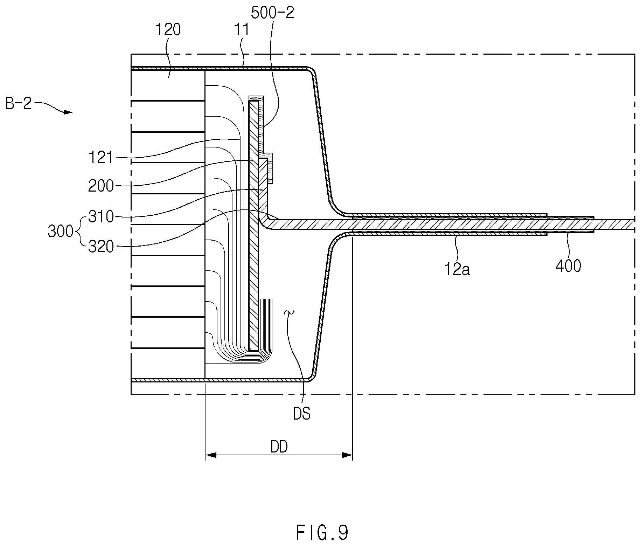

FIG. 9 is a cross-sectional view of a secondary battery B-2 according to a third embodiment of the present disclosure.

An electrode assembly EA-2 including a coating member 500-2 according to the third embodiment of the present disclosure will be described with reference to FIG. 9.

The third embodiment is different from the first embodiment in that the coating member 500-2 covers even an end portion of the first electrode lead 200.

The coating member 500-2 may be bent at the end portion of the first electrode lead 200 to be bent toward the electrode tab 120. Accordingly, the end portion of the first electrode lead 200 can be prevented from scratching the inner wall of the battery case 10.

### Forth embodiment

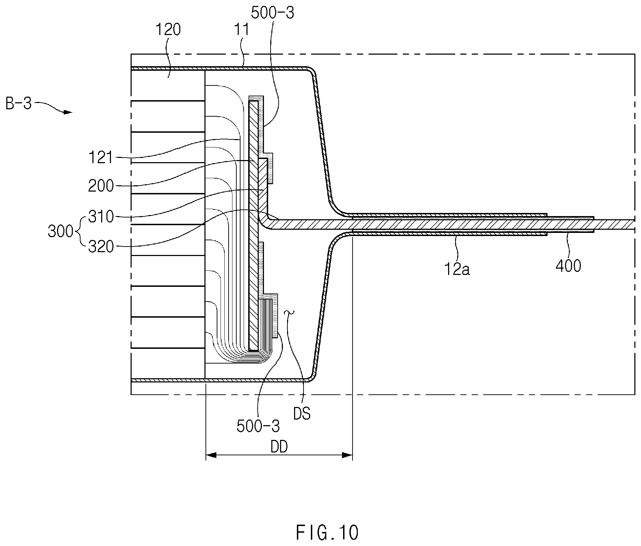

FIG. 10 is a cross-sectional view of a secondary battery B-3 according to a fourth embodiment of the present disclosure.

An electrode assembly EA-3 including a coating member 500 according to the fourth embodiment of the present disclosure will be described with reference to FIG. 10.

The fourth embodiment is different from the first embodiment in that a second coating member 500'-3 covering an end portion of the electrode tab 120 is provided.

A first coating member 500-3 corresponding to the coating member 500 having features in the first embodiment and the second coating member 500'-3 covering the electrode tab 120 may be provided. The second coating member 500'-3 may cover the end bending portion of the electrode tab 120. Like the second electrode lead 300, an end portion of the end bending portion is also formed sharply, and therefore may scratch the inner wall of the battery case 10. Therefore, the second coating member 500'-3 may be provided to play a role similar to that of the first coating member 500-3. However, the second coating member 500'-3 may cover both the end bending portion and the first electrode lead 200.

The secondary battery, the electrode assembly, and the lead assembly, which are described above, may have the following features so as to have effects of the present disclosure. The description of the above embodiments may be understood as an embodiment of the aspect of the present disclosure.

The secondary battery may include a battery case, an electrode including an electrode body and an electrode tab bent and extending from the electrode body, as an electrode accommodated in the battery case, a first electrode lead coupled to the electrode tab, a second electrode lead coupled to the first electrode lead at the opposite side of a side at which the first electrode lead faces the electrode tab, the second electrode lead extending to an outside of the battery case, and a coating member covering at least a portion of an end portion of the second electrode lead.

The electrode assembly may include an electrode including an electrode body and an electrode tab bent and extending from the electrode body, a first electrode lead coupled to the electrode tab, a second electrode lead coupled to the first electrode at the opposite side of a side at which the first electrode lead faces the electrode tab, the second electrode lead extending to the opposite side of a side at which the second electrode lead faces the first electrode lead, and a coating member covering at least a portion of an edge at which the first electrode lead and the second electrode lead are in contact with each other.

The lead assembly may include a first electrode lead, a second electrode lead including a facing portion and an extension portion bent from the facing portion to extend in a direction distant from the first electrode lead, and a coating member covering at least a portion of an edge of the facing portion.

Unless expressly stated otherwise, the disclosed embodiments may be combined with other embodiments. Alternatively, in combining an embodiment with other embodiment, any combination of embodiments may be made unless expressly limited. It should be understood that such a combination of embodiments is disclosed in the present disclosure.

Although the present disclosure has been hereinabove described with regard to a limited number of embodiments and drawings, the present disclosure is not limited thereto, and the present disclosure may be embodied in different forms by persons having ordinary skill in the technical field pertaining to the present disclosure within the technical aspect of the present disclosure and the appended claims and their equivalent scope.

### [List of Reference Numerals]

B: secondary battery
10: battery case
11: accommodation portion
11 S: electrode accommodation space
12: side portion
12a: lead sealing portion
12b: degassing sealing portion
12c: folding portion
EA: electrode assembly
100: electrode
110: electrode body
120: electrode tab
120a: first electrode tab
120b: second electrode tab
EL: electrode lead
200: first electrode lead
300: second electrode lead
310: facing portion
320: extension portion
400: lead film
500: coating member
500-3: first coating member
500'-3: second coating member
DS: dead space
DD: dead space distance
H: lead height
A1: first tab overlapping area
A2: second tab overlapping area

## Claims

1. A secondary battery comprising:
a battery case;
an electrode including an electrode body and an electrode tab bent and extending from the electrode body, as an electrode accommodated in the battery case;
a first electrode lead coupled to the electrode tab;
a second electrode lead coupled to the first electrode lead at the opposite side of a side at which the first electrode lead faces the electrode tab, the second electrode tab extending to an outside of the battery case, and
a coating member covering at least a portion of an end portion of the second electrode lead.

2. The secondary battery according to claim 1,
wherein the coating member faces an inner surface of the battery case.

3. The secondary battery according to claim 1,
wherein the coating member is configured to be in contact with an inner surface of the battery case.

4. The secondary battery according to claim 1,
wherein the coating member is more flexible than the second electrode lead.

5. The secondary battery according to claim 1,
wherein the coating member is configured to be electrically insulated.

6. The secondary battery according to claim 1,
wherein the coating member has a width larger than a width of the second electrode lead.

7. The secondary battery according to claim 1,
wherein the first electrode lead has a width larger than a width of the second electrode lead, and
wherein the coating member has a width smaller than the width of the first electrode lead.

8. The secondary battery according to claim 1,
wherein the end portion of the second electrode lead is not located beyond an end portion of the first electrode lead.

9. The secondary battery according to claim 1,
wherein the coating member covers a boundary between the first electrode lead and the second electrode lead.

10. The secondary battery according to claim 1,
wherein the coating member extends up to an end portion of the first electrode lead.

11. The secondary battery according to claim 1,
wherein the second electrode lead includes:
a facing portion facing the first electrode lead; and
an extension portion extending from the facing portion in a direction distant from the first electrode lead, and
wherein the coating member covers the facing portion.

12. The secondary battery according to claim 11,
wherein the coating member covers all end portions of the facing portion, which are not connected to the extension portion.

13. The secondary battery according to claim 1,
wherein the electrode tab includes a first electrode tab and a second electrode tab, which extend from a same side of the electrode body and are bent in different directions,
wherein the electrode is provided in plurality to be stacked, and
wherein the plurality of first electrode tabs are welded and coupled to each other, and
the plurality of second electrode tabs are welded and coupled to each other.

14. The secondary battery according to claim 1,
wherein the electrode tab includes, at an end portion thereof, an end bending portion bent in the opposite direction of a direction in which the electrode tab is bent and extends.

15. The secondary battery according to claim 14,
wherein the end bending portion covers at least a portion of the coating member.

16. An electrode assembly comprising:
an electrode including an electrode body and an electrode tab bent and extending from the electrode body;
a first electrode lead coupled to the electrode tab;
a second electrode lead coupled to the first electrode lead at the opposite side of a side at which the first electrode lead faces the electrode tab, the second electrode lead extending to the opposite side of a side at which the second electrode lead faces the first electrode lead; and
a coating member covering at least a portion of an edge at which the first electrode lead and the second electrode lead are in contact with each other.

17. The electrode assembly according to claim 16,
wherein the coating member is more flexible than the second electrode lead.

18. The electrode assembly according to claim 16,
wherein the coating member is configured to be electrically insulated.

19. The electrode assembly according to claim 16,
wherein the coating member has a width larger than a width of the second electrode lead.

20. A lead assembly comprising:
a first electrode lead;
a second electrode lead including a facing portion facing the first electrode lead and an extension portion bent from the facing portion to extend in a direction distant from the first electrode lead; and
a coating member covering at least a portion of an edge of the facing portion.
